# EUROPEAN PATENT APPLICATION

(11) **EP 2 698 226 A1**
(43) Date of publication of application: **19.02.2014**
(21) Application number: 13166338.7
(22) Date of filing: 02.05.2013
(51) Int. Cl.: B23Q 11/00, B65G 19/08

(54) **Conveyor, especially for the removal of scrap metal from a machine tool**

(30) Priority: 15.08.2012 CZ 201226543 U
(71) Applicant: Astos As a.s., 35201 As (CZ)
(72) Inventor: Schwalb, Radislav, 35201 As (CZ)
(74) Representative: Kratochvil, Vaclav

(57) **Abstract**

The conveyor, in particular for the removal of scrap metal from machine tools, comprising a trough (1) of a circular shape, in which at least one continuous chain (4) provided with rake blades (5) is installed. At least one continuous chain (4) is made from a set of links with two pins and two pulleys, attached to other links, where the chain is provided with at least one rake blade (5) for the removal of scrap metal and the chain (4) is connected to a drive cogwheel on the outside.

## Description

### Technical field

The technical solution concerns a conveyor, in particular for the removal of scrap metal from a machine tool, such as a vertical lathe. The conveyor consists of a trough of a circular shape, in which at least one continuous chain fitted with rake blades is installed.

### State of the art

Technical practice knows various solutions of scrap metal conveyors for machine tools. They are conveyors transporting scrap metal, such as metal shavings, from the machine to the place of storage. It is advantageous to remove scrap metal along a circular trajectory, in particular from vertical lathes.

Currently, the removal of metal shavings from machine tools is provided using sheet-metal chutes, linked to a straight conveyor standing before the machining table, or using a circular conveyor made of a link belt with trapezoidal links. The chutes and the manual handling are ineffective, unreliable and user-unfriendly and the current solution of a circular conveyor using a link belt is too costly because it has to be manufactured with an extremely high precision.

Another disadvantage of the existing sheet-metal chutes is the challenging manual handling of shavings, with the hazard of injury, and it is necessary to provide an access to the rear of the machining table of machine tool. If a large volume of shavings needs to be removed manually, there is a large time delay because the machine's operation needs to be interrupted.

Disadvantages of link belts with trapezoidal links are the high demands on manufacturing precision, which also results in a high production price. Another disadvantage is the limited height of the conveyor depending on the diameter of the machining table. Such conveyors have a lower belt life and higher demands on maintenance.

### Essence of the technical solution

The deficiencies mentioned above are, to a large extent, eliminated by a conveyor, in particular for the removal of scrap metal from a machine tool, comprising a trough of a circular shape in which at least one continuous chain with rake blade is installed, as specified in this technical solution. Its essence is that at least one continuous chain is formed by a set of links with two pins and two pulleys, connected with other links, where the chain is provided with at least one rake blade for the removal of scrap metal and the chain is connected, on its outer side, to a driving cogwheel that can be attached directly onto the shaft of the gearbox. The chain is provided with an optimum number of rake blades. The number of rake blades depends on the transported quantity of shavings.

At least one working train comprising a chain with rake blades is advantageously installed in the trough. A guide is advantageously installed in the bottom part of the trough and the working train leads to it. The trough can be provided with a double bottom. The trough of a circular shape can be divided at least into two segments, interconnected with a flange. The inside and the outside of the trough can be provided with a hopper at the top.

The conveyor as stipulated in this technical solution makes it possible to remove all types of shavings from the area of the machine tool so that nobody needs to interfere with their removal in blind spots behind the rotating table, e.g. of a vertical lathe.

The whole solution is based on a chain to which rake blades are attached; these blades push the shavings onto the overflow section of the conveyor. The shavings are then removed by a straight conveyor, which discharges them to a collection tank, such as a container for shavings.

The whole structure of the conveyor is made of o simple sheet-metal box in the shape of the trough, with an embedded wear-resistant bottom, a chain line, rake blades and a drive unit. If two chains next to each other are used, the conveyor's output is increased. If the outer wall of the trough is provided with a hopper at the top, smoother removal of scrap metal directly to the conveyor is ensured.

Thanks to its lower demands on precision and manufacturing technology, this solution is about 30% cheaper than the currently used circular conveyors with trapezoidal links.

Since the conveyor does not depend on the diameter of the machine tool table, as a link conveyor does, the conveyor height is only dependent on the spacing of the links and is limited by the minimum rigidity parameters of the drive system.

This circular conveyor can be also used for smaller machining table diameters. The maximum diameter of the conveyor is not in any way limited; it only depends on the size of the chain and the number of selected drives.

The solution allows for the removal of all types of shavings from the area of the machine tool - the conveyor removes elementary, i.e. loose, as well as long spiral shavings and their lumps. Elementary shavings are removed in the space between the rakes, while long shavings are removed on the backs of the rakes.

Other advantages of this solution include high lifetime, while it is not necessary to maintain or replace the conveyor belt. Another advantage is essentially no need for attendance, which also considerably increases the safety of operation.

### Clarification of drawings

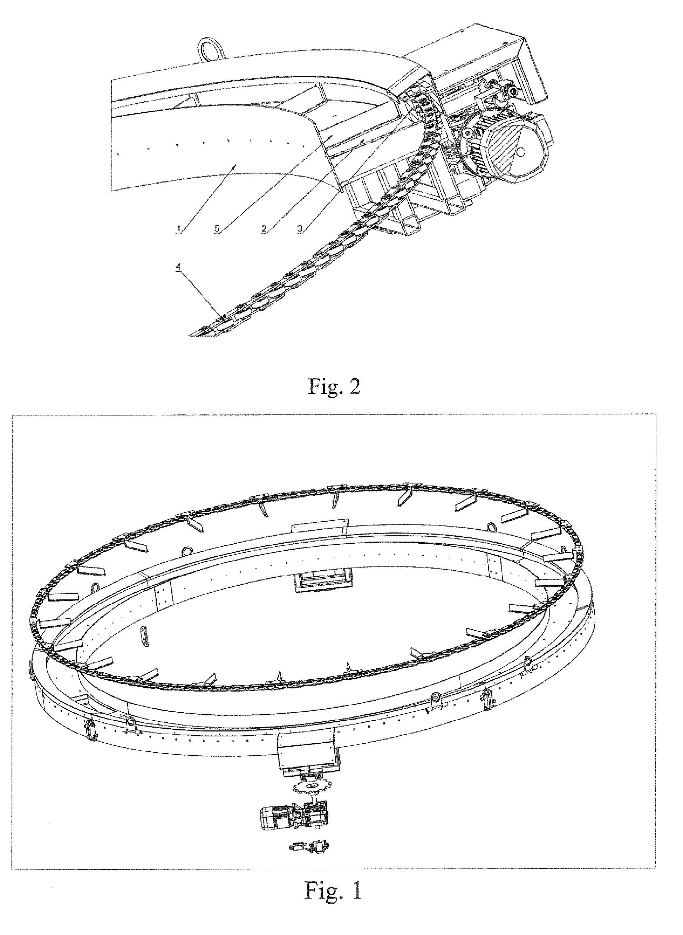

The conveyor as specified in this technical solution will be described in greater detail on specific embodiments using the attached drawings,. where figure 1 shows an axonometric view of such an embodiment of the conveyor. Figure 2 shows an axonometric view of a part of the chain line.

### Embodiments of the technical solution

An embodiment of the circular conveyor for the removal of scrap metal from a vertical lathe comprises a trough **1** of a circular shape, in which a continuous pin chain **4** is installed. Every fifth link of the chain **4** is provided with a rake blade **5**. A guide **3** is placed in the bottom section of the trough **1**, The trough **1** is provided with an embedded wear-resistant bottom **2**. The inner wall of the trough **1** leads along the diameter of the rotating table and the outer wall can be provided with a hopper at the top. The dimensions of the circular conveyor are not limited in any way; for larger diameters, the conveyor is divided into multiple segments. The number of drives is determined on the basis of the size and load of the conveyor.

The entire solution is based on a continuous chain **4**, which is moved by a cogwheel, attached directly onto a shaft of the gearbox; the chain **4** is also guided by a guide **3** along the outer side of the circular trough **1**. The number of rake blades **5** depends on the transported quantity of shavings. Rake blades **5** are attached to the chain **4** and these blades push the shavings to the overflow section of the conveyor. The shavings are then removed by a straight conveyor, which discharges them to a collection tank, such as a container for shavings.

### Industrial use

The conveyor as specified in this technical solution can be particularly used in machinery to remove scrap metal from machine tools, such as vertical lathes and the like.

## Claims

1. A conveyor, in particular for the removal of scrap metal from machine tools, comprising a trough (1) of a circular shape, in which at least one continuous chain (4) provided with rake blades (5) is installed, ***characterized in that*** at least one continuous chain (4) is made from a set of links with two pins and two pulleys, attached to other links, where the chain is provided with at least one rake blade (5) for the removal of scrap metal and the chain (4) is connected to a drive cogwheel on the outside.

2. The conveyor as in Claim 1, ***wherein*** a guide (3) is placed in the bottom section of the trough (1).

3. The conveyor as in Claim 1 or 2, ***wherein*** the trough (1) is provided with a double bottom.

4. The conveyor as in any of the above Claims, ***wherein*** the trough (1) of a circular shape is divided into at least two segments interconnected with the flange.

5. The conveyor as in any of the above Claims, ***wherein*** the wall of the trough (1) of a larger radius is provided with a hopper at the top.
